# EUROPEAN PATENT SPECIFICATION

(11) **EP 2 728 915 B1**
(45) Date of publication and mention of the grant of the patent: **21.02.2018**
(21) Application number: 12816931.5
(22) Date of filing: 20.06.2012
(51) Int. Cl.: H04W 4/08, H04W 8/18, H04L 5/00, H04W 84/12, H04W 4/00

(54) **IDENTIFIER ALLOCATION METHOD AND SYSTEM**
VERFAHREN UND SYSTEM ZUR ZUORDNUNG VON IDENTIFIKATOREN
PROCÉDÉ ET SYSTÈME D'ATTRIBUTION D'IDENTIFICATEUR

(30) Priority: 27.07.2011 CN 201110212387
(43) Date of publication of application: 07.05.2014
(73) Proprietor: ZTE Corporation, Shenzhen, Guangdong 518057 (CN)
(72) Inventor: LI, Nan, Shenzhen Guangdong 518057 (CN); XING, Weimin, Shenzhen Guangdong 518057 (CN); LV, Kaiying, Shenzhen Guangdong 518057 (CN); SUN, Bo, Shenzhen Guangdong 518057 (CN); JIANG, Jing, Shenzhen Guangdong 518057 (CN)
(74) Representative: Ahner, Philippe
(86) International application number: PCT/CN2012/077252
(87) International publication number: WO 2013/013543

(56) References cited:
- WO-A2-2006/115999
- CN-A- 101 453 774
- US-A1- 2008 062 936
- JOONSUK KIM ET AL.: 'GroupID Concept for Downlink MU-MIMO Transmission' IEEE 802.11-10/0073R0 18 January 2010, pages 1 - 8, XP002652701
- DAEWON LEE ET AL. IEEE 802.11-10/0782R0 13 July 2010, pages 3 - 16, XP055141905

## Description

### TECHNICAL FIELD

The disclosure relates to the field of Wireless Local Area Network (WLAN) communications, in particular to an Identifier (ID) allocation method and an ID allocation system.

### BACKGROUND

At present, a demand for WLAN coverage grows continuously with the rapid development of WLAN in the field of wireless networks. The group working on Institute of Electrical and Electronic Engineers (IEEE) industrial specification IEEE 802.11 defines in time a series of WLAN technical standards, such as 802.11a, 802.11b and 802.11g. Since then, other task groups appear successively committed to development of improved specifications over the existing 802.11 standard. For example, the 802.11n task group puts forward a requirement for High Throughput (HT) supporting a data rate up to 600Mbps. As an evolution of 802.11n, the 802.11ac task group further puts forward the concept of Very High Throughput (VHT) boosting the data rate to 1Gbps. Further include in the 802.11 family are 802.11ad supporting operation at 60GHZ and 802.11ah supporting operation at or below 1GHz.

In 802.11, an Access Point (AP) and a plurality of non-AP Stations (STAs) associated with the AP form a Basic Service Set (BSS). The basic principle of 802.11 is to share a wireless channel among a plurality of stations using a Carrier Sense Multiple Access with Collision Avoidance (CSMA/CA) mechanism and a backoff algorithm.

A general process of accessing an AP by an STA is as follows: the STA acquires a system information parameter of a BSS by sending a Probe Request frame and receiving a Probe Response frame returned by the AP or by receiving a Beacon frame broadcasted by the AP. The STA sends an Authentication Request frame to the AP for authentication, and the AP returns an Authentication Response frame to indicate whether the authentication is successful. After the authentication succeeds, the STA sends an Association Request frame for association, and the AP returns an Association Response frame to indicate whether the association is successful, and allocates ID information, called Association Identifier (AID), for the STA in the Association Response frame. The STA completes the basic accessing process when the authentication and the association conclude. Similarly, a process of reassociation is as follows: the STA exchanges a Reassociation Request frame and a Reassociation Response frame with the original AP or another AP in the same BSS to complete the reassociation.

At present, Internets of things are booming globally and a communication network serves as a foundation and a bridge in implementation of a Internet of things. Therefore, the WLAN is widely employed in existing Internets of things owing to features such as low cost, easy networking, and high security thereof. An Internet of things, such as smart grid, an environment monitoring terminal, or a Smart Home system, is typically characteristic of massive terminals. With the large-scale rapid development of wireless-network based Internet-of-things applications, the number of STAs accessing via one AP grows rapidly, leading to AID shortage of a conventional AP. In addition, terminals may be managed in groups in an Internet of things. However, no proper solution is proposed in prior art for the terminal-ID-allocation flow in group management of massive terminals in the WLAN.

US 2008/0062936 A1 discloses a method and system for processing, in a wireless communication device, data concerning a group resource allocation, which enables efficient use of radio frequency resources. The method includes processing a group properties message received from a radio access network (block 1410). The group properties message comprises group properties for a scheduling group, and the group properties comprise a group identifier that identifies the scheduling group. A group assignment message received from the radio access network is then processed (block 1425). The group assignment message comprises the group identifier and a position assignment within the scheduling group. The group properties are then associated with the group assignment message (block 1430).

WO 2006/115999 A2 discloses a method for addressing groups of stations in a wireless communication system, which begins by assigning the stations in the system into a number of groups. A group identifier is signaled to each station and the group identifier is indicated in a frame for each group that has data in the frame. The addressing method can be applied to power savings for the station, wherein the station enters a power saving mode if the group identifier for the station is not present in the frame.

### SUMMARY

In view of this, it is desired that an embodiment of the disclosure provides an ID allocation method and an ID allocation system, capable of avoiding AID shortage and supporting group management of terminals. With the terminal-ID allocation method of the disclosure, a terminal in a WLAN can acquire station ID information when accessing the network, and acquire group information or group information and new station ID information by message exchange after accessing the network. Therefore, the method is suitable for an application in which a large number of terminals access and need to be grouped.

The features of the method and system according to the present disclosure are defined in the independent claims, and the preferable features according to the present invention are defined in the dependent claims.

With the ID allocation method and the ID allocation system provided by the embodiments of the disclosure, an STA sends a first radio frame to an AP; and the AP sends the STA a second radio frame carrying group ID information or group ID information and second station ID information allocated to the STA. In a case that the STA sends a Reassociation Request frame to the AP, the AP may also send the STA a Reassociation Response frame carrying group ID information and/or station ID information reallocated to the STA. With embodiments of the disclosure, a terminal is distinguished by the group ID information and the station ID information, such that it is possible to avoid AID shortage and support group management of terminals.

### BRIEF DESCRIPTION OF THE DRAWINGS

Fig.1 is a flowchart of an ID allocation method according to an embodiment of the disclosure;
Fig.2 is a flowchart of allocating ID information by an AP during association according to the disclosure;
Fig.3 is a flowchart of allocating ID information by a network entity at the same layer as an AP or at a higher layer during association according to the disclosure;
Fig.4 is a flowchart of another ID allocation method according to an embodiment of the disclosure;
Fig.5 is a schematic diagram of a parametrical structure according to the disclosure;
Fig.6 is a schematic diagram of another parametrical structure according to the disclosure;
Fig.7 is a schematic diagram of another parametrical structure according to the disclosure; and
Fig.8 is a schematic diagram of another parametrical structure according to the disclosure.

### DETAILED DESCRIPTION

According to embodiments of the disclosure, a non-AP Station (STA) sends a first radio frame to an Access Point (AP); and the AP sends a second radio frame to the STA, wherein the second radio frame carries group ID information or group ID information and second station ID information allocated to the STA. In a case that the STA sends a Reassociation Request frame to the AP, the AP may also send the STA a Reassociation Response frame carrying group ID information and/or station ID information reallocated to the STA.

The disclosure is proposes given that there is no terminal-ID allocation method based on group management of massive terminals in a WLAN disclosed in related art, to which end it is desired that an embodiment of the disclosure provides a terminal-ID allocation method.

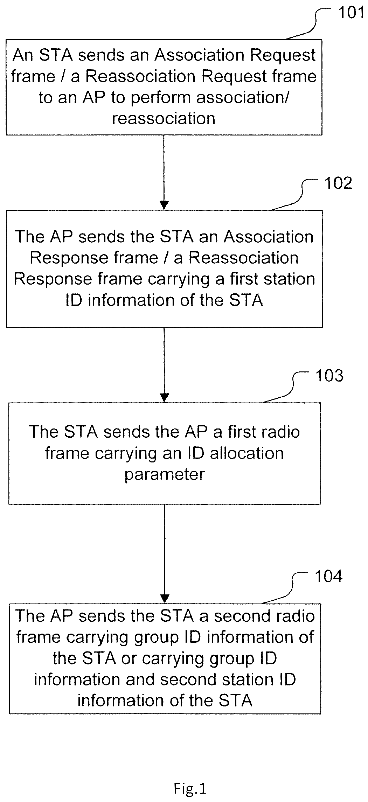

Fig.1 is a flowchart of an ID allocation method according to an embodiment of the disclosure, as shown, the flow includes steps as follows.
Step 101: An STA sends an Association Request frame / a Reassociation Request frame to an AP to perform association/reassociation.
Step 102: After receiving the Association Request frame / Reassociation Request frame, the AP sends the STA an Association Response frame / a Reassociation Response frame carrying a first station ID information of the STA. Then, frame exchanging transmission may be performed between the STA and the AP.
Step 103: The STA sends the AP a first radio frame carrying an ID allocation parameter.
   Here, the ID allocation parameter includes one or more of the following: a category of application, a provider ID, a power-saving capability, and an operator ID of the STA.
Step 104: The AP sends the STA a second radio frame, wherein the second radio frame carries group ID information allocated to the STA according to the ID allocation parameter and/or capability information of the STA acquired from a Probe Request frame and/or an Association Request frame / a Reassociation Request frame, or the second radio frame carries group ID information and second station ID information allocated to the STA according to the ID allocation parameter and/or capability information of the STA acquired from the Probe Request frame and/or the Association Request frame / the Reassociation Request frame. The second station ID information can be the same as or different from the first station ID information.

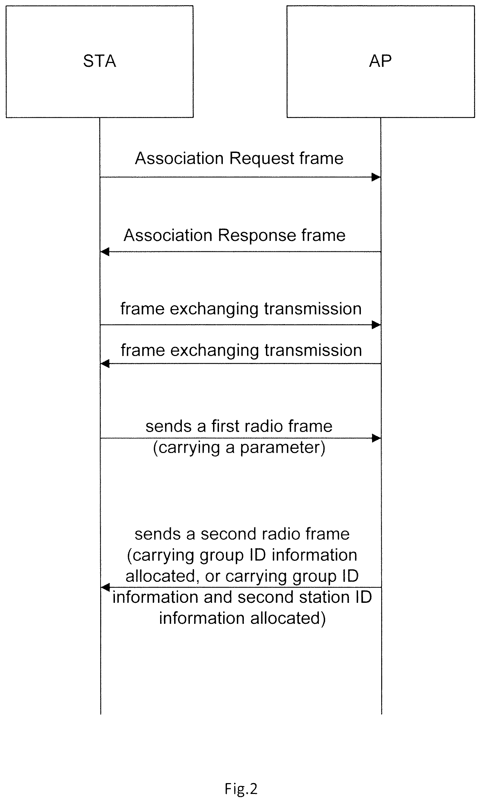

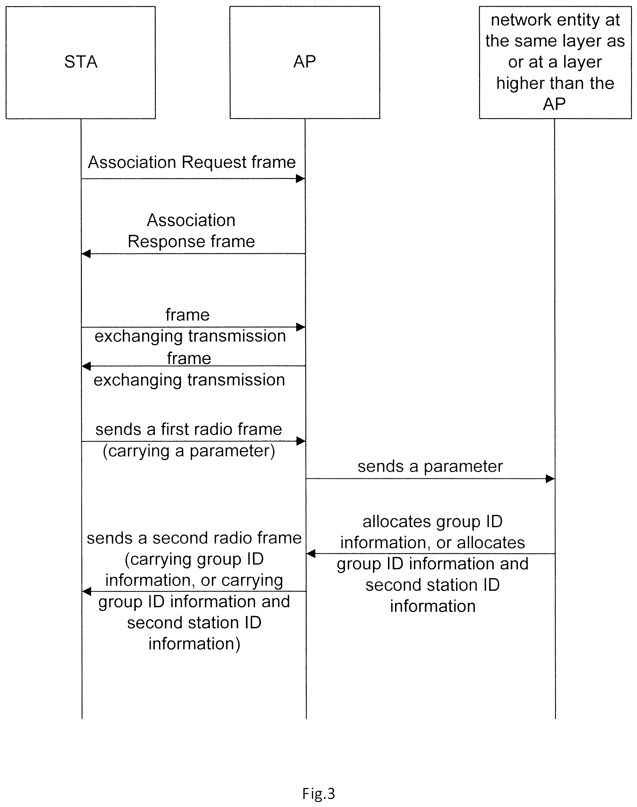

Here, the group ID information or the second station ID information can be allocated by the AP or by a network entity located at the same layer as or at a layer higher than the AP is. For example, during association, a case of allocation by the AP is as shown in Fig.2, and a case of allocation by the network entity at the same layer as or at a higher layer is as shown in Fig.3. The AP, or the network entity located at the same layer as or at a layer higher than the AP is, allocates the group ID information and the second station ID information to the STA specifically according to at least one of the following parameters: a category of application, a provider ID, a power-saving capability, and an operator ID of the STA. The parameters, the group ID information and the second station ID information are carried by a message defined by a Media Access Control (MAC) layer or its upper layer.

Note that in the case that the second radio frame carries only the group ID information, the station ID information allocated in Step 102 is used by default.

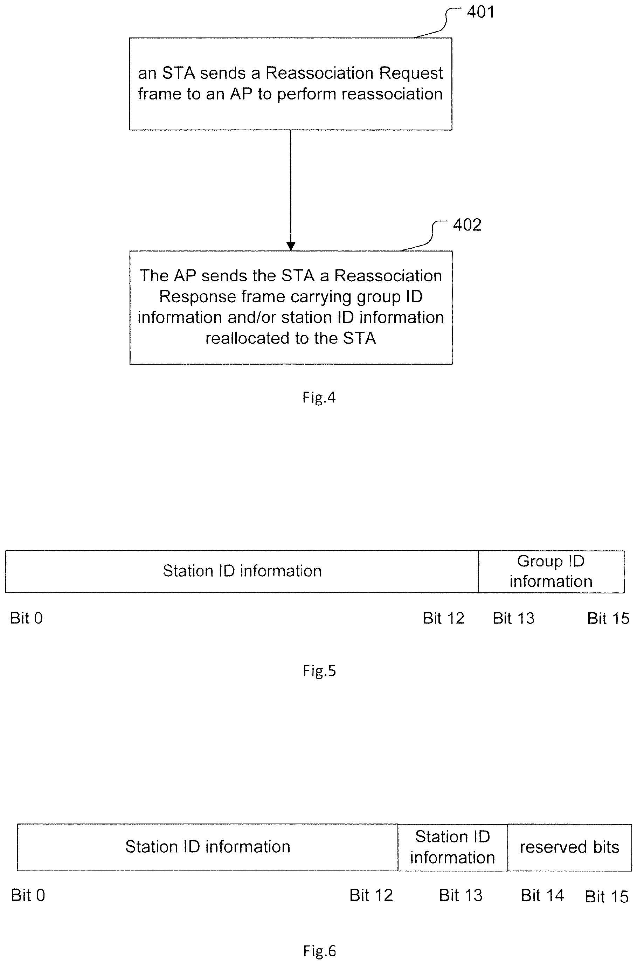

Fig.4 is a flowchart of another ID allocation method according to an embodiment of the disclosure, as shown, the flow includes steps as follows.
Step 401: An STA sends a Reassociation Request frame to an AP to perform reassociation.
Step 402: After receiving the Reassociation Request frame, the AP sends the STA a Reassociation Response frame carrying group ID information and/or station ID information reallocated to the STA. Then, the STA performs frame exchanging transmission with the AP using the group ID information and/or the station ID information.

Note that in the disclosure, each STA is identified by the group ID information and the station ID information, for example with the parametrical structure as shown in Fig.5, Fig.6, Fig.7, or Fig.8.

In Fig.5, the group ID information and the station ID information take two bytes altogether, wherein the lower thirteen bits (bit 0 to bit 12) are for the station ID information, and bit 13 to bit 15 are for the group ID information. Thereby, a BSS can support a maximal number of 2³ groups, and each group can support a maximal number of 2¹³ STAs.

In Fig.6, the group ID information and the station ID information take two bytes altogether, wherein the lower thirteen bits are for the station ID information, bit 13 is for the group ID information, and the top two bits are reserved for future extension. Thereby, a BSS can support a maximal number of 2 groups, and each group can support a maximal number of 2¹³ STAs.

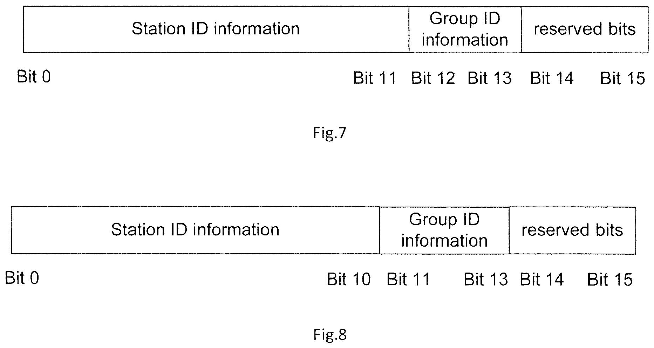

In Fig.7, the group ID information and the station ID information take two bytes altogether, wherein the lower twelve bits are for the station ID information, bit 12 and bit 13 are for the group ID information, and the top two bits are reserved. Thereby, a BSS can support a maximal number of 2² groups, and each group can support a maximal number of 2¹² STAs.

In Fig.8, the group ID information and the station ID information take two bytes altogether, wherein the lower eleven bits (bit 0 to bit 10) are for the station ID information, bit 11 to bit 13 are for the group ID information, and the top two bits are reserved for future extension. Thereby, a BSS can support a maximal number of 2³ groups, and each group can support a maximal number of 2¹¹ STAs.

Correspondingly, the disclosure further provides an ID allocation system, including an STA and an AP, wherein
the STA is configured to send a first radio frame to the AP; and
the AP is configured to send the STA a second radio frame carrying group ID information or group ID information and second station ID information allocated to the STA.

The STA is further configured to send the AP an Association Request frame / a Reassociation Request frame; and
the AP is further configured to send the STA an Association Response frame / a Reassociation Response frame carrying a first station ID information of the STA.

The AP is further configured to allocate the group ID information or the group ID information and the second station ID information to the STA.

The system further includes a network entity located at the same layer as or at a layer higher than the AP is, wherein the network entity is configured to allocate the group ID information or the group ID information and new station ID information to the STA, and send the allocated ID information to the AP.

Correspondingly, the disclosure further provides an ID allocation system, including an STA and an AP, wherein
the STA is configured to send a Reassociation Request frame to the AP; and
the AP is configured to send the STA a Reassociation Response frame carrying group ID information and/or station ID information reallocated to the STA.

The AP is further configured to allocate the group ID information and/or the station ID information to the STA.

The system further includes a network entity located at the same layer as or at a layer higher than the AP is, wherein the network entity is configured to allocate the group ID information or the station ID information to the STA and send the allocated ID information to the AP.

A technical solution of the disclosure is described below with specific embodiments, and it should be understood that the embodiments described herein are only intended to describe and explain the disclosure instead of limiting the disclosure. In the case of no conflict, the embodiments of the disclosure and features therein can be combined with each other as long as no conflict results from the combination. In the embodiments of the disclosure, specifically, an access point is AP and an non-AP station is STA.

### First embodiment

This is an embodiment for allocating ID information to an STA after association.

Specifically, the STA sends an Association Request frame to an AP to perform association; and after receiving the Association Request frame, the AP sends the STA an Association Response frame carrying a first station ID information (Association ID) allocated to the STA.

After the association, the STA performs frame exchanging transmission with the AP using the AID. The STA sends a first high-layer message to the AP; and the AP sends a second high-layer message to the STA actively or in response to the first high-layer message from the STA. Both the first and the second high-layer messages refer to messages defined by a network entity at or above an MAC layer, and can be transmitted between the STA and the AP by being carried in a message payload at the MAC layer, namely, the first and the second high-layer messages can be transmitted by being carried respectively in the first and the second radio frames.

The first high-layer message includes at least one of the following parameters: a category of application of the STA, a provider ID of the STA, a power-saving capability of the STA, and an operator ID of the STA. The category of application of the STA includes: an intelligent meter, a sensor, a monitor, a load balancer and the like; the provider ID includes: a manufacturer ID and an agent ID, and the like; the power-saving capability of the STA includes a supported power-saving mode, a monitoring interval or a maximal idle time span, and the like; and the operator ID includes a uniformly allocated organization identifier and the like. After receiving the first high-layer message, the AP returns the second high-layer message including the group ID information (group ID or Page ID) allocated to the STA, or including the group ID information and the second station ID information allocated to the STA; and the group ID information/the second station ID information can be allocated to the STA by the AP or by a network entity located at the same layer as or at a layer higher than the AP is according to a parameter in the first high-layer message and/or the capability information of the STA acquired from a Probe Request frame and/or an Association Request frame. The second station ID information can be the same as or different from the first station ID information.

When the group ID information is allocated to the STA, the STA performs frame exchanging transmission with the AP using the allocated group ID information and the first station ID information. If the group ID information and the second station ID information are allocated to the STA, the STA performs frame exchanging transmission with the AP using the group ID information and the second station ID information.

### Second embodiment

There are two ways of allocation in the embodiment, which are, respectively: allocating ID information to an STA during or after reassociation.

Way I: an STA sends a Reassociation Request frame to an AP; and after receiving the Reassociation Request frame, the AP sends the STA a Reassociation Response frame carrying an AID (i.e., first station ID information) allocated to the STA. After the reassociation, the STA performs frame exchanging transmission with the AP using the AID.

After the reassociation, the STA sends a first high-layer message to the AP; and the AP sends a second high-layer message to the STA actively or in response to the first high-layer message from the STA. The first high-layer message includes at least one of the following parameters: a category of application, a provider ID, a power-saving capability, and an operator ID of the STA. After receiving the first high-layer message, the AP returns the second high-layer message including group ID information (Group ID or Page ID) or group ID information and second station ID information allocated to the STA by the AP, or by a network entity located at the same layer as or at a layer higher than the AP is, according to a parameter in the first high-layer message and/or the capability information of the STA acquired from an Association Request frame/ a Reassociation Request frame. If the group ID information is allocated to the STA, the STA performs frame exchanging transmission with the AP using the group ID information and first station ID information. If the group ID information and the second station ID information are allocated to the STA, the STA performs frame exchanging transmission with the AP using the group ID information and the second station ID information.

Way II: druing reassociation, an STA sends a Reassociation Request frame to an AP; and after receiving the Reassociation Request frame, the AP sends a Reassociation Response frame to the STA. If the STA reassociates with an original AP, the original AP has acquired parameters such as a category of application, a provider ID, a power-saving capability, and an operator ID of the STA; or, if the STA reassociates with another AP in the BSS, the new AP can acquire such parameters of the STA from the original AP. When an AP, or a network entity located at the same layer as or at a layer higher than the AP is, saves the parameters locally, the Reassociation Response frame can carry the group ID information and/or the station ID information reallocated to the STA. The STA performs frame exchanging transmission with the AP using the group ID information and/or the station ID information reallocated.

It may be seen that with the terminal-ID allocation method of the disclosure, a terminal in a WLAN can acquire station ID information when accessing the network, and acquire group information or group information and new station ID information by message exchange after accessing the network. Therefore, the method is suitable for an application in which a large number of terminals access and need to be grouped.

## Claims

1. An Identifier, abbrieviated as ID, allocation method, comprising:
sending, by a non-AP Station, abbrieviated as STA, a first radio frame to an Access Point, abbrieviated as AP; and
sending, by the AP, the STA a second radio frame carrying group ID information and second station ID information allocated to the STA,
wherein the method further comprises: before the sending, by the STA, the first radio frame to the AP,
sending, by the STA, an Association Request frame / a Reassociation Request frame to the AP (101); and
sending, by the AP, the STA an Association Response frame / a Reassociation Response frame carrying a first station ID information of the STA (102),
**characterised in that** the group ID information and the second station ID information carried by the second radio frame are group ID information and second station ID information allocated to the STA according to an ID allocation parameter carried by the first radio frame; and the second station ID information can be the same as or different from the first station ID information,
the ID allocation parameter comprises one or more of the following: a category of application, a provider ID, a power-saving capability, and an operator ID of the STA.

2. The method according to claim 1, further comprising: before the sending, by the AP, the STA a second radio frame, allocating, by the AP or by a network entity located at the same layer as or at a layer higher than the AP is, the group ID information and the second station ID information to the STA.

3. The method according to any one of claims 1 to 2, wherein the ID allocation parameter, the group ID information and the second station ID information are carried by a message defined by a Media Access Control (MAC) layer or its upper layer.

4. The method according to claim 1, wherein the first radio frame is a Reassociation Request frame, and the second radio frame is a Reassociation Response frame.

5. An Identifier, abbrieviated as ID, allocation system, comprising a non-AP Station, abbrieviated as STA, and an Access Point, abbrieviated as AP, wherein
the STA is configured to send a first radio frame to the AP; and
the AP is configured to send the STA a second radio frame carrying group ID information and second station ID information allocated to the STA, wherein
the STA is further configured to, before sending the first radio frame to the AP, send an Association Request frame / a Reassociation Request frame to the AP; and
the AP is further configured to send the STA an Association Response frame / a Reassociation Response frame carrying a first station ID information of the STA,
**characterised in that** the group ID information and the second station ID information carried by the second radio frame are group ID information and second station ID information allocated to the STA according to an ID allocation parameter carried by the first radio frame; and the second station ID information can be the same as or different from the first station ID information,
the ID allocation parameter comprises one or more of the following: a category of application, a provider ID, a power-saving capability, and an operator ID of the STA.

6. The system according to claim 5, wherein the first radio frame is a Reassociation Request frame, and the second radio frame is a Reassociation Response frame.

7. The system according to claim 5 or 6, wherein
the AP is further configured to allocate the group ID information and/or the second station ID information to the STA.

8. The system according to claim 5 or 6, further comprising a network entity located at the same layer as or at a layer higher than the AP is, the network entity being configured to allocate the group ID information and the second station ID information to the STA and send the allocated ID information to the AP.

## Patentansprüche

1. Identifizierungs- (abgekürzt ID) Zuweisungsverfahren, umfassend Senden durch eine Nicht-AP Station, abgekürzt als STA bezeichnet, einen ersten Funkrahmen an einen Zugangspunkt, abgekürzt mit AP bezeichnet; und
Senden durch den AP der STA einen zweiten Funkrahmen, der die Gruppen ID-Information trägt und die ID-Information der zweiten Station, die der STA zugewiesen ist,
wobei das Verfahren des weiteren die Schritte umfaßt: bevor der erste Funkrahmen durch die STA an den AP gesendet wird,
Senden eines Assoziierungsanfragerahmens / eines Reassoziierungs-Anfragerahmens durch die STA an den AP (101); und
Senden durch den AP der STA einen Assoziierungsantwortrahmen / einen Reassoziierungs-Antwortrahmen, der eine erste Stations ID-Information des STA (102) trägt,
**dadurch gekennzeichnet, daß** die Gruppen ID-Information und die zweite Station ID-Information, die von dem zweiten Funkrahmen getragen werden, Gruppen ID-Information und zweite Station ID-Information sind, die der STA zugewiesen sind, und zwar gemäß einem ID-Zuweisungsparameter, der von dem ersten Funkrahmen getragen wird; und daß die zweite Station ID-Information dieselbe wie von der ersten Station ID-Information sein kann oder sich von dieser unterscheidet,
wobei der ID-Zuweisungsparameter eines oder mehrere der folgenden Mittel umfaßt: eine Anwendungskategorie, eine Provider-ID, eine Stromsparfähigkeit und eine Betreiber-ID der STA.

2. Verfahren nach Anspruch 1, ferner **dadurch gekennzeichnet, daß** durch den AP die STA einen zweiten Funkrahmen sendet, zugewiesen durch den AP oder durch eine Netzwerk-Gesamtheit, die in der gleichen Schicht oder in einer höheren Schicht als der AP liegt sowie der Gruppen ID-Information der zweiten Station ID-Information für die STA.

3. Verfahren nach Anspruch 1 oder 2, **dadurch gekennzeichnet, daß** der ID-Zuweisungsparameter, die Gruppen ID-Information und die zweite Stations-ID-Information durch eine Nachricht übertragen werden, die durch eine Media Access Control (MAC) -Schicht oder ihre obere Schicht bestimmt wird.

4. Verfahren nach Anspruch 1, **dadurch gekennzeichnet, daß** der erste Funkrahmen eine Reassoziierungs-Anfragerahmen ist und der zweite Funkrahmen ein Reassoziierungs-Antwortrahmen ist.

5. Identifizierungs-Zuweisungssystem, abgekürzt bezeichnet als ID, umfassend eine Nicht-AP Station, abgekürzt bezeichnet mit STA, und einen ersten Zugangspunkt, abgekürzt bezeichnet mit AP, wobei die STA so ausgebildet ist, daß an den AP ein zweiter Funkrahmen gesendet wird, der eine Gruppen-ID-Information und eine zweite Stations ID-Information trägt, die dem STA zugewiesen ist, wobei die STA des weiteren so gestaltet ist, daß vor dem Senden des ersten Funkrahmens an die AP ein Assoziierungs-Anfragerahmen / ein Reassoziierungs-Anfragerahmen an den AP gesendet wird; und daß der AP des weiteren so gestaltet ist, daß die STA einen Assoziierungs-Antwortrahmen / einen Reassoziierungs-Antwortrahmen senden, die eine erste Station ID-Information der STA trägt,
**dadurch gekennzeichnet, daß** die Gruppen ID-Information und die zweite Stations ID-Information, die von dem zweiten Funkrahmen getragen werden, eine Gruppen ID-Information und eine zweite Stations ID-Information sind, die der STA gemäß einem ID-Zuweisungsparameter zugewiesen werden, der von dem ersten Funkrahmen getragen wird, und daß die zweite ID-Information dieselbe sein kann wie die von der ersten Station ID-Information oder sich von ihr unterscheidet,
wobei der ID-Zuweisungsparameter eine oder mehrere der folgenden Elemente aufweist: eine Anwendungskategorie, eine Provider ID, eine Stromsparfähigkeit und eine Betriebs ID der STA.

6. System nach Anspruch 5, **dadurch gekennzeichnet, daß** der erste Funkrahmen ein Reassoziierungs-Aufforderungsrahmen ist und daß der zweite Funkrahmen ein Reassoziierungs-Antwortrahmen ist.

7. System nach Anspruch 5 oder 6, **dadurch gekennzeichnet, daß** die AP des weiteren so gestaltet ist, daß sie die Gruppen ID-Information und / oder die zweite Stations ID-Information der STA zuordnet.

8. System nach Anspruch 5 oder 6, ferner **gekennzeichnet durch** eine Netzwerkgesamtheit, die in derselben Schicht oder einer höheren Schicht liegt als der AP, und daß die Netzwerkgesamtheit so gestaltet ist, daß sie die Gruppen ID-Information und die zweite Stations ID-Information der STA zuweist und die zugewiesene ID-Information an den AP sendet.

## Revendications

1. Procédé d'allocation d'identifiant, abrégé sous la forme ID, comprenant :
l'envoi, par une station non-AP, abrégée sous la forme STA, d'une première trame radio à un point d'accès, abrégé sous la forme AP ; et
l'envoi, par l'AP, à la STA d'une seconde trame radio acheminant des informations d'ID de groupe et des secondes informations d'ID de station allouées à la STA,
dans lequel le procédé comprend en outre :
avant l'envoi, par la STA, de la première trame radio à l'AP,
l'envoi, par la STA, d'une trame de demande d'association/d'une trame de demande de réassociation à l'AP (101) ; et
l'envoi, par l'AP, à la STA d'une trame de réponse d'association/d'une trame de réponse de réassociation acheminant les premières informations d'ID de station de la STA (102),
**caractérisé en ce que** les informations d'ID de groupe et les secondes informations d'ID de station acheminées par la seconde trame radio sont des informations d'ID de groupe et des secondes informations d'ID de station allouées à la STA selon un paramètre d'allocation d'ID acheminé par la première trame radio ; et les secondes informations d'ID de station peuvent être identiques ou différentes des premières informations d'ID de station,
le paramètre d'allocation d'ID comprend un ou plusieurs de ce qui suit : une catégorie d'application, un ID de fournisseur, une capacité d'économie d'énergie et un ID d'opérateur de la STA.

2. Procédé selon la revendication 1, comprenant en outre : avant l'envoi, par l'AP, à la STA d'une seconde trame radio, l'allocation, par l'AP ou par une entité de réseau située au niveau de la même couche ou au niveau d'une couche plus élevée que là où est l'AP, des informations d'ID de groupe et des secondes informations d'ID de station à la STA.

3. Procédé selon l'une quelconque des revendications 1 et 2, dans lequel le paramètre d'allocation d'ID, les informations d'ID de groupe et les secondes informations d'ID de station sont acheminés par un message défini par une couche de contrôle d'accès au support (MAC) ou sa couche supérieure.

4. Procédé selon la revendication 1, dans lequel la première trame radio est une trame de demande de réassociation et la seconde trame radio est une trame de réponse de réassociation.

5. Système d'allocation d'identifiant, abrégé sous la forme ID, comprenant une station non-AP, abrégée sous la forme STA, et un point d'accès, abrégé sous la forme AP, dans lequel
la STA est configurée pour envoyer une première trame radio à l'AP ; et
l'AP est configuré pour envoyer à la STA une seconde trame radio acheminant des informations d'ID de groupe et des secondes informations d'ID de station allouées à la STA, dans lequel
la STA est en outre configurée, avant l'envoi de la première trame radio à l'AP, pour envoyer une trame de demande d'association/une trame de demande de réassociation à l'AP ; et
l'AP est en outre configuré pour envoyer à la STA une trame de réponse d'association/une trame de réponse de réassociation acheminant des premières informations d'ID de station de la STA,
**caractérisé en ce que** les informations d'ID de groupe et les secondes informations d'ID de station acheminées par la seconde trame radio sont des informations d'ID de groupe et des secondes informations d'ID de station allouées à la STA selon un paramètre d'allocation d'ID acheminé par la première trame radio, et les secondes informations d'ID de station peuvent être identiques ou différentes des premières informations d'ID de station,
le paramètre d'allocation d'ID comprend un ou plusieurs de ce qui suit : une catégorie d'application, un ID de fournisseur, une capacité d'économie d'énergie et un ID d'opérateur de la STA.

6. Système selon la revendication 5, dans lequel la première trame radio est une trame de demande de réassociation et la seconde trame radio est une trame de réponse de réassociation.

7. Système selon la revendication 5 ou 6, dans lequel
l'AP est en outre configuré pour allouer les informations d'ID de groupe et/ou les secondes informations d'ID de station à la STA.

8. Système selon la revendication 5 ou 6, comprenant en outre une entité de réseau située au niveau de la même couche ou au niveau d'une couche plus élevée que là où est l'AP, l'entité de réseau étant configurée pour allouer les informations d'ID de groupe et les secondes informations d'ID de station à la STA et envoyer les informations d'ID allouées à l'AP.
